# EUROPEAN PATENT APPLICATION

(11) **EP 4 589 821 A1**
(43) Date of publication of application: **23.07.2025**
(21) Application number: 25151804.9
(22) Date of filing: 14.01.2025
(51) Int. Cl.: H02K 5/10, H02K 5/22, H02K 7/14

(54) **SEALED ELECTRIC MOTOR**

(30) Priority: 18.01.2024 US 202463622244 P; 13.01.2025 US 202519017977
(71) Applicant: Black & Decker, Inc., New Britain, CT 06053 (US)
(72) Inventor: HOLLINS, Amber J., Radford, 24141 (US); NOBIS, James M., Waxhaw, 28173 (US); DEMANT, Tobias, 65201 Wiesbaden (DE); FOGLE, John B., White Hall, 21161 (US); LOVEGROVE, Jacob L., Towson, 21204 (US)
(74) Representative: SBD IPAdmin

(57) **Abstract**

An electric motor is provided including an inner rotor, an outer stator, a first end cap formed on a first side of the stator, a second end cap formed on a second side of the stator and secured to the first end cap to form a compartment around the stator and the rotor, and motor wires electrically coupled to stator windings and extending out of the compartment through a wire lid. A terminal box is mounted to the wire lid to receive the motor wires, and it includes a box base fastened to the second end cap and forming a first sealed coupling to the wire lid, and a cover that makes a second sealing coupling with the box base. The terminal box receives a plurality of power wires external to the electric motor and electrically couples them to the motor wires within the box base.

## Description

This invention relates to a sealed electric motor, and particularly to a sealed terminal box for an electric motor.

According to a first aspect, the present invention provides an electric motor according to Claim 1 of the appended claims.

A second aspect of the invention provides a power tool according to Claim 12 of the appended claims.

Preferred, and other optional, features of the invention are described and defined in the dependent claims.

According to an embodiment of the invention, an electric motor is provided comprising: a stator having a stator core, a plurality of stator teeth extending radially from the stator core, and a plurality of windings wound around the plurality of stator teeth; a rotor rotatably positioned relative to the stator and having a rotor core and a plurality of permanent magnets secured to the rotor core in magnetic interface with the plurality of stator windings; a motor spindle coupled to the rotor and extending along a center axis; a first end cap formed on a first side of the stator; a second end cap formed on a second side of the stator and secured to the first end cap to form a compartment around the stator and the rotor; a plurality of motor wires electrically coupled to the plurality of stator windings and extending out of the compartment through a wire lid; and a terminal box mounted to the wire lid to receive the plurality of motor wires, the terminal box comprising a box base fastened to the second end cap and forming a first sealed coupling to the wire lid, and a cover that makes a second sealing coupling with the box base, wherein the terminal box is arranged to receive a plurality of power wires external to the electric motor and electrically couple the plurality of power wires to the plurality of motor wires within the box base.

In an embodiment, the electric motor further includes a plurality of stator terminals electrically coupled to the plurality of windings and projecting axially from the stator through at least one slot formed in the second end cap such that a distal end of the plurality of stator terminals projects from a surface of the second end cap facing away from the stator, wherein the plurality of power wires is coupled to the distal end of the plurality of stator terminals to supply electric power to the plurality of stator windings via the plurality of stator terminals; and a motor cover mounted on the second end cap to form a second compartment around the distal end of the plurality of stator terminals and at least a portion of the plurality of power wires.

In an embodiment, the first end cap, the second end cap, and the motor cover form a substantially watertight seal around the stator, the rotor, and the position sensor assembly.

In an embodiment, the wire lid is formed at least partially by the motor cover.

In an embodiment, the electric motor further includes a grommet disposed around the plurality of motor wires within the wire lid, wherein the grommet includes a seal lip comprising elastically-deformable material projecting out of an end of the wire lid, and wherein the box base is pressed against the seal lip to make the first sealed coupling.

In an embodiment, the box base includes a first face shaped to be mounted on an outer surface of the second end cap, and a second face opposite the first face and including a peripheral wall forming a compartment, and where the box base further includes an opening between the first face and the second face through which the plurality of motor wires is received into the compartment.

In an embodiment, the cover is mounted around the peripheral wall with a layer of sealing material in between to make the second sealing coupling.

In an embodiment, the plurality of power wires is received through a recessed portion of the peripheral wall, further including a grommet disposed around the plurality of power wires and captured within the recessed portion.

In an embodiment, the box base includes a plurality of interior walls forming channels for electrical connections between the respective ones of the plurality of motor wires and the plurality of power wires.

Embodiments and/or aspects of the invention may include any combination of one of more features described above or discussed in this disclosure.

The drawings described herein are for illustration purposes only and are not intended to limit the scope of this disclosure.
Fig. 1 depicts an exemplary side view of a concrete rammer including a sealed electric motor, according to an embodiment;
Figs. 2A and 2B depict perspective views of the electric motor including a first end cap, a second end cap, and a motor cover, according to an embodiment;
Fig. 3 depicts a cross-sectional view of the electric motor, according to an embodiment;
Figs. 4A and 4B depict perspective exploded views of the electric motor additionally including a stator assembly, a rotor assembly, and a Hall assembly, according to an embodiment;
Figs. 5A-5D depict various perspective and exploded views of a sealed terminal box mounted on the electric motor to seal the wiring connections;
Figs. 6A and 6B depict views of terminal connections inside the sealed terminal box, according to an embodiment;
Fig. 7 depicts a cross-sectional view of the electric motor including front and rear bearing support inserts, according to an embodiment;
Figs. 8A and 8B depict partially exploded views of the second and first end caps respectively provided with rear and front bearing support insert, according to an embodiment;
Fig. 9 depicts a cross-sectional view of the electric motor including a rear bearing support insert, according to an alternative embodiment; and
Figs. 10A and 10B depict partially views of the second end cap and the rear bearing support insert, according to the alternative embodiment.

Corresponding reference numerals indicate corresponding parts throughout the several views of the drawings.

The following description illustrates the claimed invention by way of example and not by way of limitation. The description clearly enables one skilled in the art to make and use the disclosure, describes several embodiments, adaptations, variations, alternatives, and uses of the disclosure, including what is presently believed to be the best mode of carrying out the claimed invention. Additionally, it is to be understood that the disclosure is not limited in its application to the details of construction and the arrangements of components set forth in the following description or illustrated in the drawings. The disclosure is capable of other embodiments and of being practiced or being carried out in various ways. Also, it is to be understood that the phraseology and terminology used herein is for the purpose of description and should not be regarded as limiting.

The following terms are used throughout the description, the definitions of which are provided herein to assist in understanding various aspects of the subject disclosure.

In an embodiment, the terms "airtight", "substantially airtight", "air-sealed" and "substantially air-sealed" refer to significant resistance against ingress or passage of air from and to the outside environment. It should be understood, however, that ingress or passage of miniscule and negligible amounts of air leakage through microscopic gaps and cracks is encompassed within the scope of these limitations.

The terms "watertight", "substantially watertight", "water-sealed" and "substantially water-sealed" refer to significant resistance against ingress or passage of water from and to the outside environment. This includes protection against ingress of water when subject to powerful water jets testing (IPX6 testing) at a minimum, or temporary immersion in water (IPX7 testing), continuous immersion in water (IPX8 testing), or high-pressure water jets testing (IPX9 rating) in some applications. It should be understood, once again, that ingress or passage of miniscule and negligible amounts of water leakage through microscopic gaps and cracks is encompassed within the scope of these limitations.

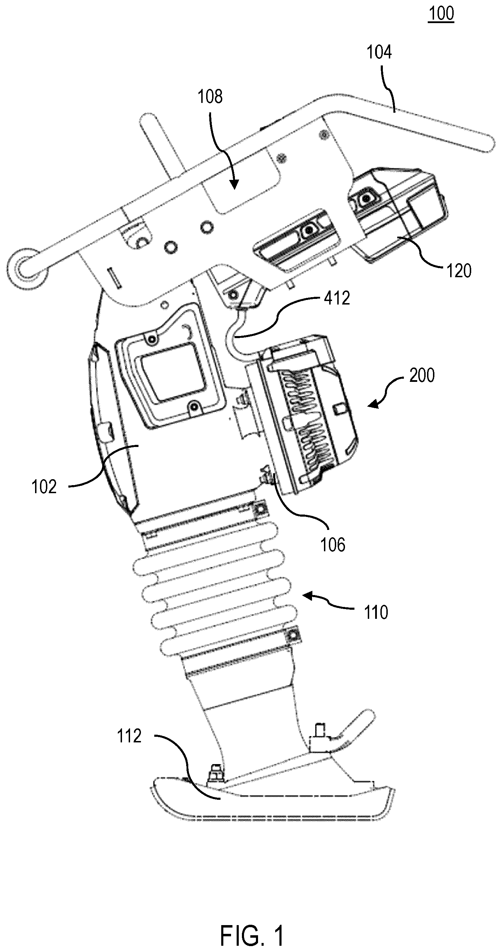

Fig. 1 depicts an exemplary side view of an electric rammer 100 including a sealed electric motor 200, according to an embodiment. Electric rammer 100 includes a primary housing 102 and a reciprocating leg portion 110 which can be coupled to a compacting foot 112. The compacting foot 112 can be adapted for compacting soil, hardcore, asphalt or any other material to be compacted. The reciprocating leg portion 110 can include a reciprocating mechanism which is arranged to drive the compacting foot up and down along the longitudinal axis of the tool. The electric motor 200 is mounted on the primary housing 102. In an embodiment, a rear side of the primary housing 102 includes a projected mounting platform 106 to which the electric motor 200 is secured. The rammer can include a handle 104 by which a user can maneuver the rammer. Located within the handle 104 is a control housing 120. A battery compartment 108 is located above the control housing 120 that removably receives a battery pack (not shown) for powering the electric motor 200. The control housing 120 supports a control and power module (not shown) that regulates a supply of power from the battery pack to the electric motor 200. The control and power module is electrically coupled to the motor 200 via a power cord 412 that extends outside the primary housing 102.

While the above-described embodiment describes an electric rammer as an exemplary power tool, it should be understood that the electric motor 200, battery compartment, etc. may be utilized in other types of powered devices, including concrete and metalworking tools (e.g., plate compactors, hammers, core drills, saws, grinders, etc.) and outdoor and gardening products (e.g., lawn mowers, snow blowers, etc.).

The electric motor 200 is described in detail herein.

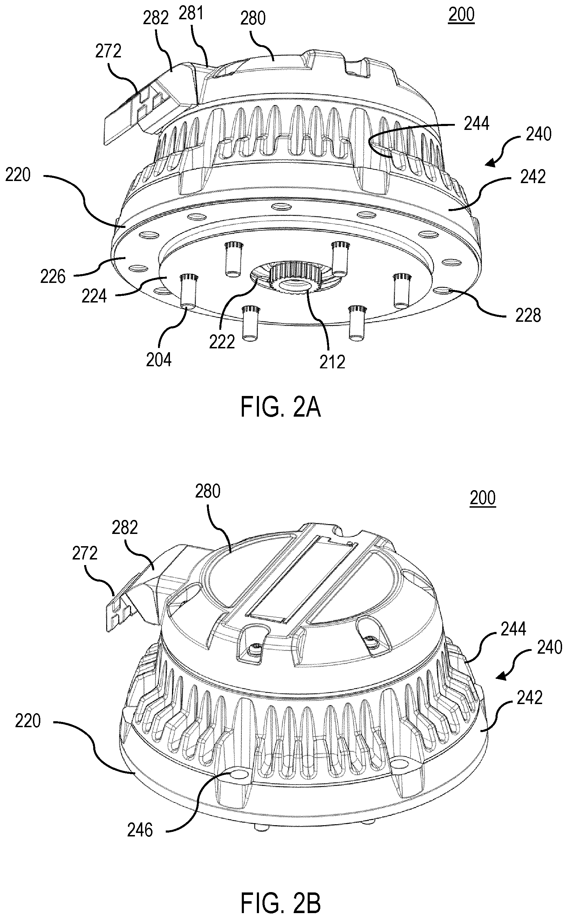

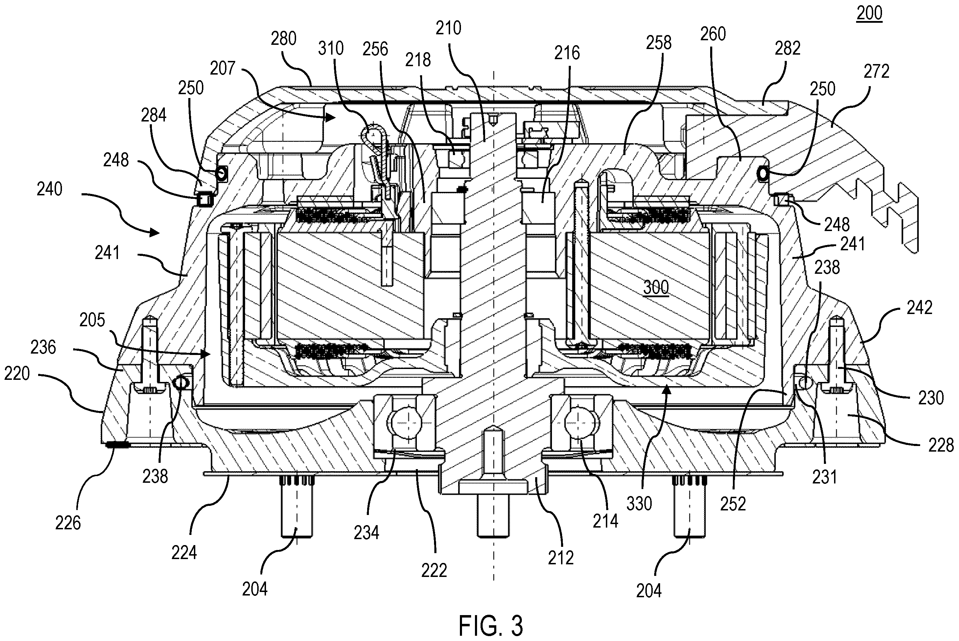

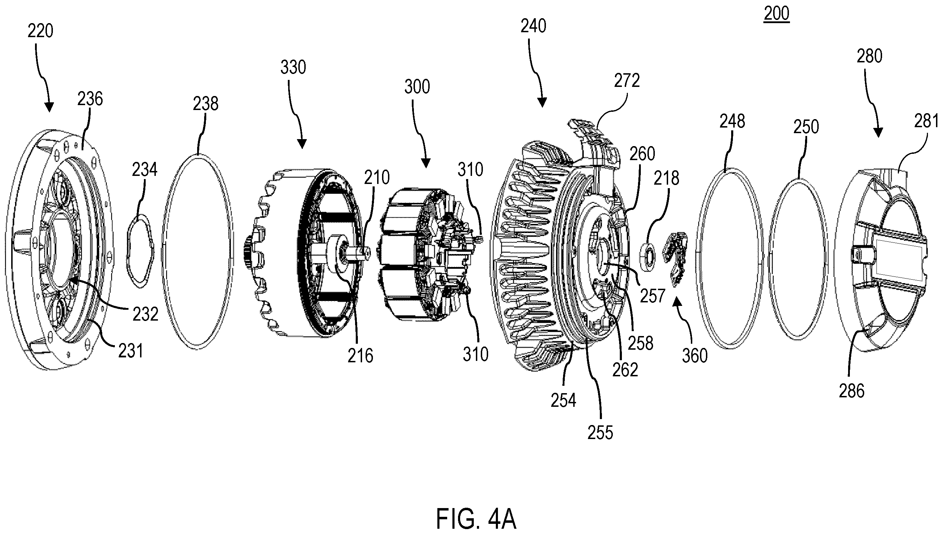

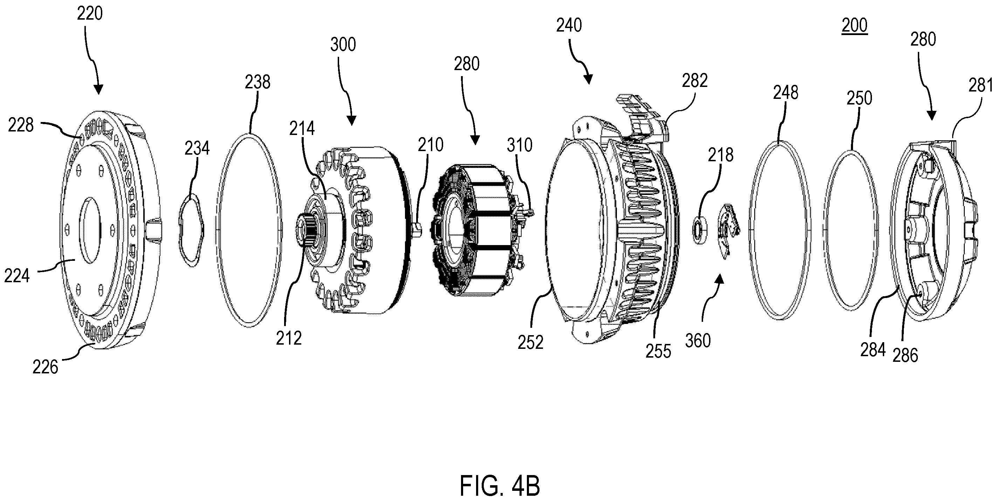

Figs. 2A and 2B depict perspective views of the electric motor 200, according to an embodiment. Fig. 3 depicts a cross-sectional view of the electric motor 200, according to an embodiment. Figs. 4A and 4B depict perspective exploded views of the electric motor 200, according to an embodiment.

As shown in these figures, in an embodiment, electric motor 200 is an outer-rotor BLDC motor and includes a first end cap 220, also referred to herein as a deck plate or a motor plate, a second end cap 240, also referred to herein as a motor cup or stator mount, and a motor cover 280. These components together form a motor housing. In an embodiment, electric motor 200 further includes a stator assembly 300, a rotor assembly 330, and a Hall assembly 360, housed within the motor housing.

In an embodiment, the first end cap 220 includes a center opening 222 inside which the spline 212 is located. In an embodiment, a bottom surface of the first end cap 220 includes a projected inner circular surface 224 sized to fit into the circular opening 146 of tool housing, and an annular outer recessed surface 226 configured to rest of the tool housing. In an embodiment, a series of peripheral through-holes 228 are formed through the outer recessed surface 226. A first subset of the peripheral through-holes 228 is used for securing the motor deck 200 to the housing of the power tool. A second subset of the peripheral through-holes 228 is used for securing the second end cap 240 to the first end cap 220 via fasteners 230.

In an embodiment, the design of the first end cap 220 may be modified as needed to meet the surface contact profile of the tool that it is mounted or attached to. For example, the size, shape, or even the existence of the projected inner circular surface 224 may vary depending on the tool housing that it is mounted to.

In an embodiment, a top surface of the first end cap 220 forms a center annular member 232 forming a bearing pocket (or bearing holder) coaxial with the center opening 222 and having a larger diameter than the center opening 222. The center bearing pocket receives a front bearing 214 of the motor spindle 210 to provide axial and radial support for the motor spindle 210 relative to the first end cap 220. In an embodiment, a wave spring 234 preloads onto the front bearing 214 inside the center bearing pocket. Further, in an embodiment, the top surface of the first end cap 220 includes an annular peripheral projection 236 that receives at least a portion of the rotor assembly 330.

In an embodiment, the second end cap 240 is positioned between the first end cap 220 and the motor cover 280 and mates with the first end cap 220 to form a first compartment 205 around the stator assembly 300 and the rotor assembly 330, and a second compartment 207 around the Hall assembly 360 and the wiring connections. In an embodiment, while the first and second compartments are in fluid communication through the second end cap 240, the second end cap 240 forms fully-sealed connections with the first end cap 220 and the motor cover 280 around the first and second compartments to substantially block ingress of liquid and air into the electric motor 200. In an embodiment, these include a first O-ring 238 disposed between the first end cap 220 and the second end cap 240, and second O-ring 248 and third O-ring 250 disposed between the second end cap 240 and the motor cover 280. In an embodiment, these seals provide a substantially and/or fully watertight and a substantially and/or fully airtight motor housing around the internal motor components including the stator assembly 300, the rotor assembly 330, and the Hall assembly 360, with no air inlets or outlets to allow ingress of water or air inside the motor housing.

In an embodiment, the second end cap 240 includes an outer annular body 241 formed around the stator assembly 300 and the rotor assembly 330; a flange 242 projecting outwardly from the outer annular body 241 to form approximately the same outer diameter as the annular peripheral projection 236 of the first end cap 240 and configured to rest on a top surface of the annular peripheral projection 236 and form a substantially flush outer surface with the annular peripheral projection 236; and an annular projection 252 projecting from the bottom surface of the flange 242. In an embodiment, the annular projection 252 is securely received, e.g. via press-fitting or slip-fitting, inside the annular peripheral projection 236 of the first end cap 240 to form a seal between the two end caps. In an embodiment, O-ring 238 is received inside an annular groove 231 formed in the annular peripheral projection 236 in elastic engagement with the annular projection 252 for improved sealing between the two end caps.

In an embodiment, the second end cap 240 includes a series of peripheral through-holes 246 formed through the flange 242 that align with corresponding the second subset of the peripheral through-holes 228 of the first end cap 220 and through which the outer fasteners 202 are received and secured to the housing of the power tool.

In an embodiment, the second end cap 240 is made of heat conductive material such as aluminum, thus acting as a heat sink for the electric motor components. In an embodiment, the annular body of the second end cap 240 includes a sloped outer surface and a series of fins 244 that extend longitudinally along the outer surface for improved heat transfer from the electric motor 200. In an embodiment, fins 244 include sloped outer edges that extend from the flange 242.

In an embodiment, the second end cap 240 further includes an inner annular body 256 provided radially inwardly of the outer annular body 241 and forming a center opening 257 therein for receiving the end of the motor spindle 210, and a main radial body 258 disposed on one side of the stator assembly 300 and extending from the inner annular body 256 and the outer annular body 241. As will be described later in detail, the inner annular body 256 provides a bearing pocket to received and support a rear bearing 216 of the motor spindle 210 from a bottom surface thereof to provide axial and radial support for the motor spindle 210 relative to the second end cap 240. In an embodiment, the inner annular body 256 also includes supports a sense magnet 218 received through the center opening 257 on an upper side of the second end cap 240. Further, in an embodiment, a front portion of the inner annular body 256 forms a stator mount onto which the stator assembly 300 is mounted.

In an embodiment, an upper portion of the outer annular body 241 of the second end cap 240 includes a stepped portion 254 that leads to formation of an annular wall 260 around the main radial body 258. In an embodiment, the annular wall 260 includes an annular groove 255 formed therein at a distance above the stepped portion 254. In an embodiment, a second O-ring 248 is mounted on the stepped portion 254, and a third O-ring 250 is received within the annular groove 255.

In an embodiment, Hall assembly 360 is mounted on the top surface of the main radial body 258 around the center opening 257 in close proximity to the sense magnet 218. Hall assembly 360 magnetically interacts with the sense magnet 218 to provide signals associated with an angular orientation of the motor spindle 210. In an embodiment, sense magnet 218 is a ring-shaped member formed of magnetic material having, for example, a N-S-N-S orientation. Additionally, in an embodiment, the main radial body 258 a series of slots 262 formed around the center opening 257. In an embodiment, series of stator terminals 310 projecting axially from the stator assembly 300 is received through the slots 262 to the upper side of the second end cap 240.

In an embodiment, the motor cover 280 encapsulates the second compartment 207 to complete the motor seal. In cooperation with other sealing components described above, the motor cover 280 protects motor power and signal wiring connections, the Hall assembly 360, the sense magnet 218, and other motor components against ingress of water and contaminated air. Further, in an embodiment, the motor cover 280 includes a wire lid 281 that cooperates with the second end cap 240 to form an opening that receives a grommet 282 around the strain relief 272 and fully seal the area around the strain relief 272.

In an embodiment, the motor cover 280 includes a radial encapsulation body 283 and an annular wall 284 extending in the direction of the second end cap 240. In an embodiment, the annular wall 284 is sized to be securely fitted, e.g., via press-fitting or slip-fitting, around the annular wall 260 of the second end cap 240 against the stepped portion 254. In an embodiment, the second O-ring 248 provides axial sealing between the annular wall 284 of the motor cover 280 and the stepped portion 254 of the second end cap 240. In an embodiment, the third O-ring 250 provides secondary radial sealing between the annular wall 284 of the motor cover 280 and the annular wall 260 of the second end cap 240. In an embodiment, motor cover 280 includes a series of peripheral through-holes 286 that receive fasteners (not shown) for fastening the motor cover 280 to the second end cap 240.

In an embodiment, in addition to the second end cap 240, the first end cap 220 and the motor cover 280 are also made, fully or at least partially, of thermally-conducive material such as metal. These components, in addition to thermal gap pads and other features described below in detail, provide an effective thermal management system for the electric motor 200 despite its high voltage and power output.

In an embodiment, stator and rotor assemblies include many of the features described in US Patent Application Publication No. 2020/0343789 filed April 23, 2020, and US Patent Application No. 18/236,586 filed August 22, 2023, contents of which are incorporated herein by reference in their entireties.

In an embodiment, the motor wiring connections includes positional signal wires 271 coupled to the Hall assembly 360 and power wires 270 coupled to the stator terminals 310 on the upper side of the second end cap 240. In an embodiment, additional signal wires, e.g., a wire coupled to a thermistor within the stator assembly 300 for detecting a temperature of the stator windings, may also be included as a part of the wire cord 270. The entirety of the wire cord 270 is captured by the strain relief 272 at the point of exit from the second end cap 240. In an embodiment, the strain relief 272 is molded to engage the annular wall 260 of the annular wall 260 of the second end cap 240.

In the above-described embodiment, the wire cord 270 passing through the strain relief 272 has to be of appropriate length to reach the control unit. This may present hurdles to the manufacturing process, as the required length is not always known, particularly when the motor is designed to be assembled in a variety of different tools. To overcome this problem, while providing an effective seal around the wire cord 270, a sealed terminal box is provided to secure wires externally to the wire cord 270 of the electric motor, as described here.

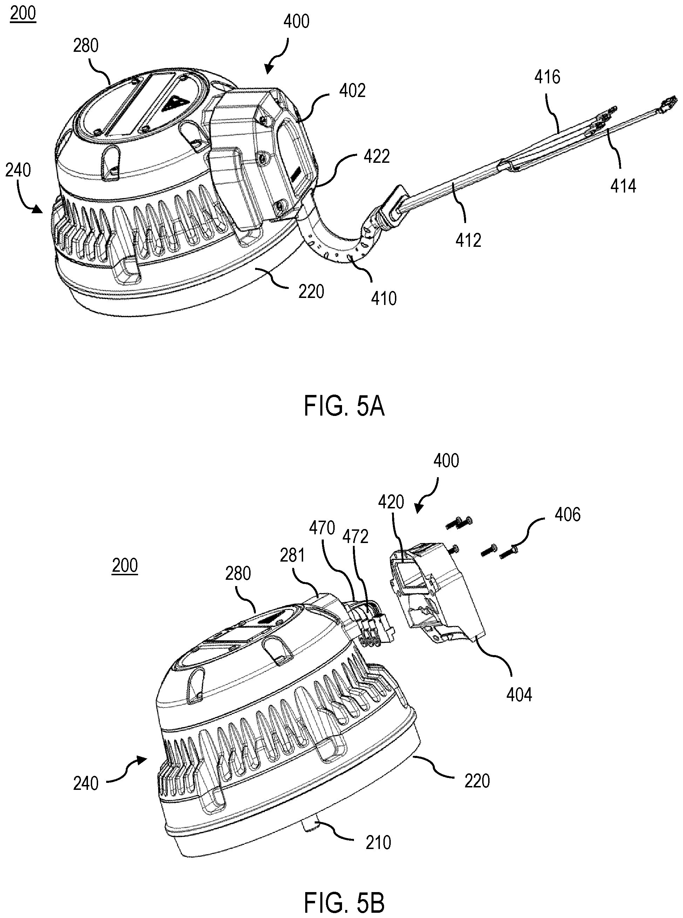

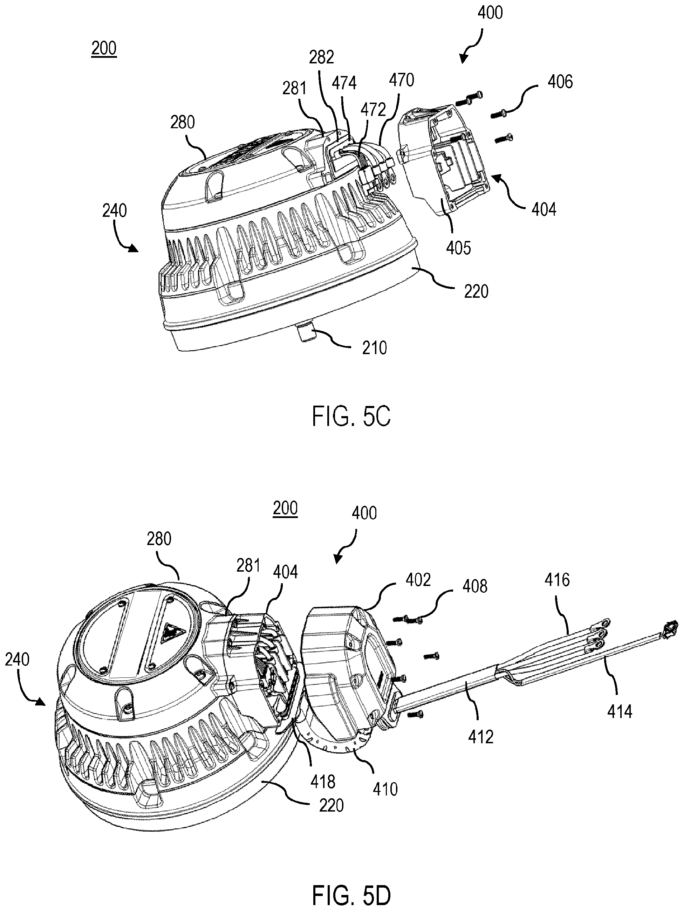

Fig. 5A depicts a perspective view of a sealed terminal box 400 mounted on the electric motor to seal wiring connections in and out of the electric motor, according to an embodiment. Figs. 5B-5D depict various exploded views of the sealed terminal box 400 as it is being assembled onto the electric motor 200, according to an embodiment.

As shown in these figures, in an embodiment, terminal box 400 includes a box base 404 and a cover 402. The box base 404 mates with the wire lid 281 of the motor cover 280 and receives motor wires 470 and signal wire 472 from the motor through the grommet 282. The terminal box 400 further receives a separate wire cord 412 including power wires 416 and control wires 414 from outside the motor and facilitates connections between motor and power wires 416 and 470 and signal and control wires 414 and 472. The cover 402 provides a sealed containment around the box base 404. In this manner, motor 200 may be manufactured without a cord and may be coupled to a wire cord 412 of a desired length in the course of assembling the motor within a power tool. The length and geometry of wire cord 412 (including power wires 416 and control wires 414) may vary according to the power tool that the motor 200 is mounted to.

In an embodiment, a rear face of the box base 404 (i.e., the portion of the box base facing the motor) includes a lower portion that is mounted in contact with the outer surface of the second end cap 240 and an upper portion that is mounted in contact with the wire lid 281 of the motor cover 280. The upper portion of the box base 404 includes an opening 420 that receives motor wires 470 and signal wires 472 therethrough. Specifically, the motor wires 470 and signal wires 472, which come out of the motor through the wire lid 281 and are sealed via grommet 282, are received through the opening 420. The area of the upper portion around the opening 420 sits against the grommet 282 and the wire lid 281. In an embodiment, grommet 282 includes an additional seal lip 474 made of elastically-deformable material that projects front a front end of the grommet 282 and, when pressed against the box base 404, provides a sealed enclosure between the grommet 282 and the box base 404 around the wires. Further, in an embodiment, a tongue and groove sealing arrangement is provided between the grommet 282 and the wire lid 281 for improved sealing. The lower portion includes a non-planar profile designed to sit against the outer surface of the second end cap 240 and optionally engage some of the external ribs of the second end cap 240. The box base 404 is fastened to the second end cap 240 and the motor cover 280 via a series of fasteners 406.

In an embodiment, the motor wires 470 and signal wires 414 pass through the opening 420 to a front face of the box base 404, where they are electrically coupled to power wires 416 and control wires 414, as described below in detail. The front face of the box base 404 is defined by a peripheral wall 405 forming a compartment around the wires. Thereafter, the cover 402 is mounted around the peripheral wall 405 and fastened thereto via a series of fasteners 408, which are received into threaded receptacles formed in the peripheral wall 405. The cover 402 cooperates with the peripheral wall 405 of the box base 404 to form a sealed enclosure around the compartment. In an embodiment, a layer or a ring of elastically-deformable material such as rubber (not shown) is disposed (e.g., via a molding process) on the inner surface of the wall of the cover to form a seal between the cover 402 and the outer surface of the peripheral wall 405 of the box base 404 around the compartment. A lower portion of the cover 402 includes a wire trap 422 for guiding the wire cord 412 into the compartment. In an embodiment, a sleeve 410 and grommet 418 is mounted around the wire cord 412 at its entry point into the compartment through the wire trap 422. The grommet 418 is fully captured by the cover 402 and the box base 404 to seal against ingress of water and/or air around the wire cord 412. It is noted once again that the geometry of the grommet 418 and the sleeve 410 may vary depending on the power tool that the motor is mounted to.

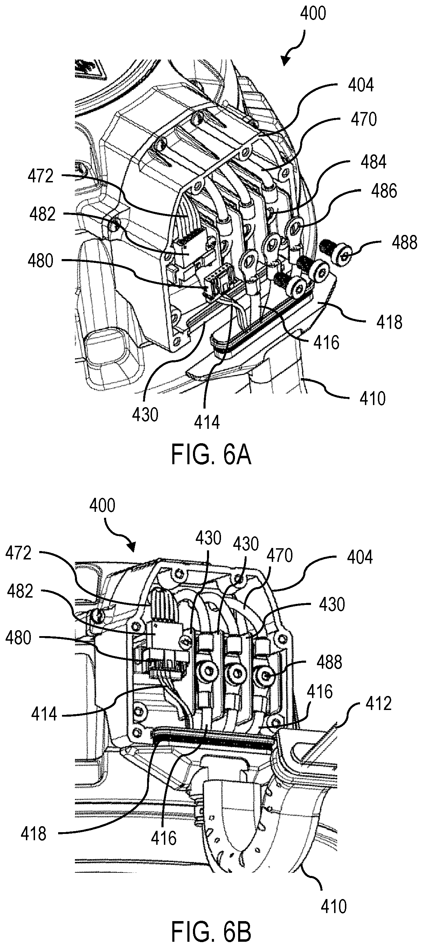

Figs. 6A and 6B depict views of terminal connections inside the compartment of the box base 404 of the sealed terminal box 400, according to an embodiment. As shown here, the grommet 418 is seated against a recessed lower wall 430 of the box base 404 before fully captured by the cover 402. In an embodiment, the grommet 418 forms a tongue/groove sealing arrangement with the cover 402 and the recessed lower wall 430 of the box base 404 for improved sealing. Internal to the compartment are a series of interior walls 430 that form channels for disposition of the individual wiring connections. In an embodiment, control wires 414 are electrically coupled to signal wires 472 of the motor via male and female connectors (e.g., ribbon connectors) 480 and 482. In an embodiment, power wires 416 are electrically coupled to motor wires 470 via ring terminals 484 and 486 secured to the respective ends of the wires. The ring terminals 484 and 468 are overlapped and fastened into corresponding threaded receptacles (not shown) of the box base 404 via fasteners 488. Each threaded receptacle is located within a respective channel formed between the interior walls 430. The interior walls 430 insulate the connection points of the ring terminals 484 and 468 and protect the wires from electrical shortage, even in the presence of metal particles or other contaminate.

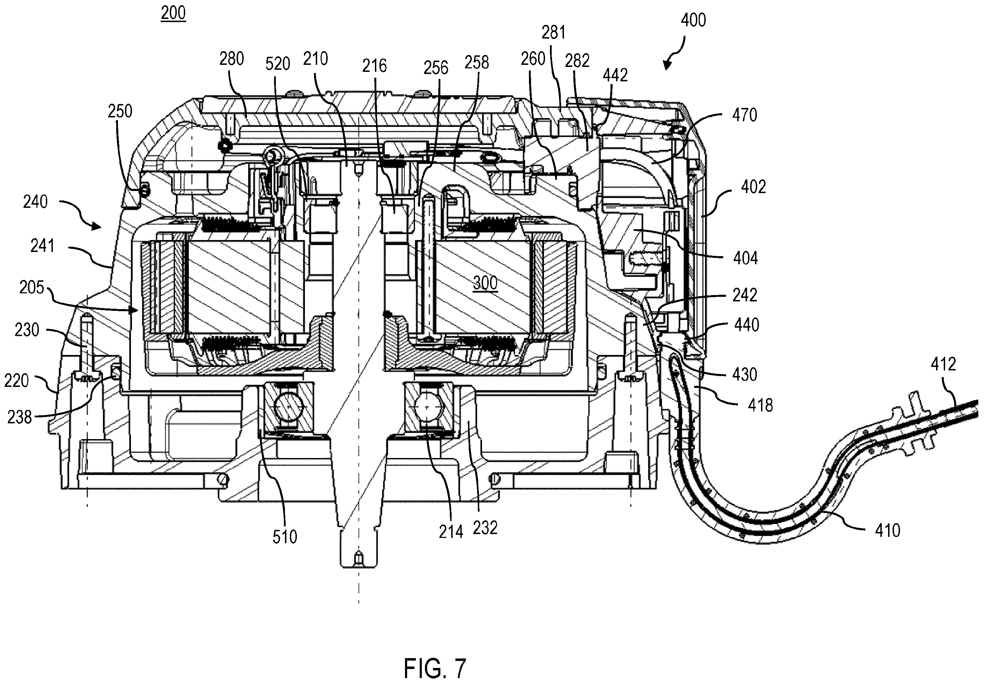

Fig. 7 depicts a cross-sectional view of the electric motor 200 including the terminal box 400, according to an embodiment. As shown, the terminal box 400 guides the power cord 412 (including the sleeve 410) out of the grommet 418 in a direction substantially parallel to the longitudinal axis of the motor and alongside the outer surface of the first end cap 220. Further, this image illustrates the above-discussed tongue and groove sealing arrangements 440 of the grommet 418 relative to the cover 402 and the recessed lower wall 430 of the box base 404, as well as the tongue and groove sealing arrangements 442 of the grommet 282 relative to wire lid 281 of the motor cover 280.

In addition, the motor 400 herein is provided with front and rear bearing support inserts 510 and 520, as discussed herein detail, according to an embodiment.

In an embodiment, bearing support inserts 510 and 520 are provided to strengthen structural support for the front and rear bearings 214 and 216, and protects the center annular member 232 of the first end cap 220 and the inner annular body 256 of the second end cap 240 from damage resulting from high load or excessive usage. In particular, while first and second end caps 220 and 240 are made of metal material having high thermal conductivity for efficient heat dissipation (e.g., aluminum), the bearing support inserts 510 and 520 are made of metal material with higher strength and stiffness (e.g., steel) to withstand the stress of high load.

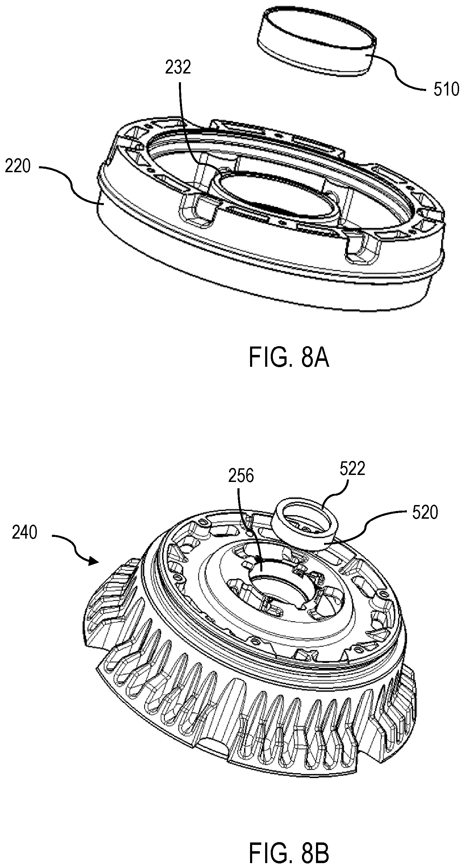

Figs. 8A and 8B depict partially exploded views of the first end cap 220 and the second end cap 240 respectively provided with front and rear bearing support insert 510 and 520, according to an embodiment. As shown here, and with continued reference to Fig. 7, each bearing support insert 510 and 520 is sized to be securely received (e.g., via press-fitting) into the corresponding bearing pocket formed by the center annular member 232 of the first end cap 220 and the inner annular body 256 of the second end cap 240. The outer races of the respective front and rear bearings 214 and 216 are similarly securely received (e.g., via press-fitting) into the body of the bearing support inserts 510 and 520. Each support insert 510 and 520 has a thickness of approximately 0.5 mm to 2 mm, sufficient to absorb the stress exerted from the bearings at high load.

In an embodiment, support insert 520 additionally includes an inwardly-projecting annular lip 522 that engages a rear surface of the outer race of the rear bearing 216 to axially constrain the rear bearing 216 in the rearward direction. Support insert 520 is received into the inner annular body 256 from the rear side of the second end cap 240. The rear bearing 216 is then received along with the shaft from the front side of the second end cap 240 within the front portion of the inner annular body 256 (i.e., the portion that forms a stator mount onto which the stator assembly 300 is mounted) and secured into the support insert 520 until it engages the annular lip 522.

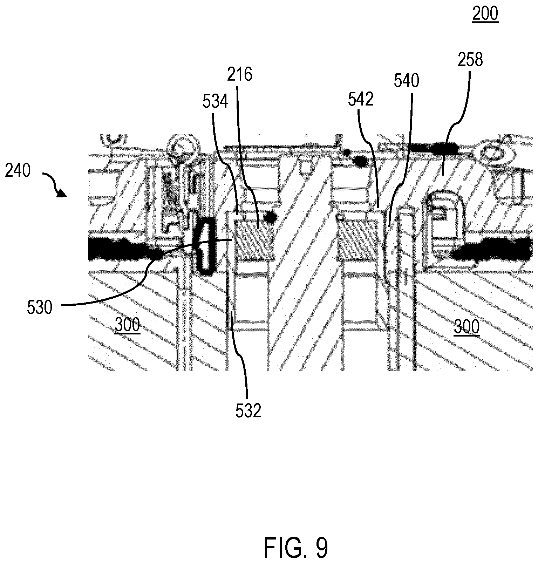

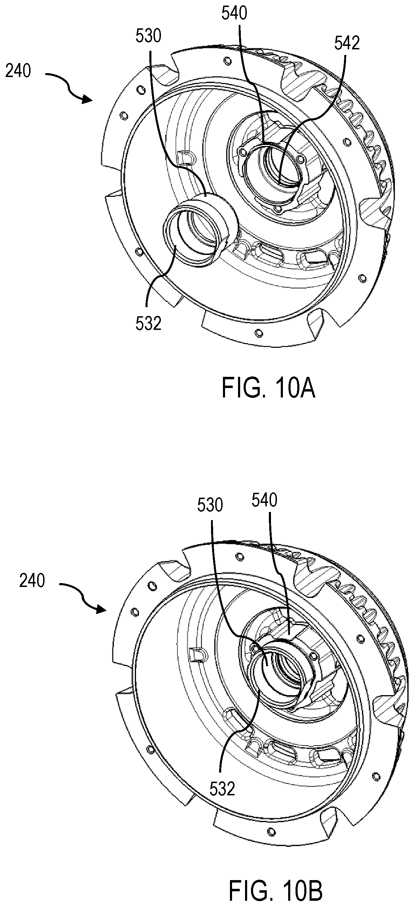

Fig. 9 depicts a partial cross-sectional view of the electric motor 200 including a rear bearing support insert 530, according to an alternative embodiment. Figs. 10A and 10B depict partially views of the second end cap and the rear bearing support insert 530, according to an embodiment.

In this alternative embodiment, the rear bearing support insert 530 integrally includes a stator mount portion 532 extending therefrom into the body of the stator assembly 300. In other words, instead of the front portion of the inner annular body 256 of the second end cap 240 providing structural support for the stator assembly 300, this support is provided by the rear bearing support insert 530. Since the rear bearing support insert 530 is made of high strength metal, this embodiment further enhances the structural integrity of the motor as a whole. In an embodiment, the rear bearing support insert 530 further includes a rear annular lip 534 opposite the stator mount portion 532.

In an embodiment, the second end cap 240 includes a modified inner annular body 540 that does not extend into the body of the stator assembly 300. Instead, the second end cap 240 is located fully outside the body of the stator assembly 300. In an embodiment, the second end cap 240 includes an inner lip 542 projecting inwardly from the inner annular body 540 that provides an axial restraining feature at the rear end of the inner annular body 540. Unlike the previous embodiment, the rear bearing support insert 530 is securely received (e.g., via press-fitting) into the inner annular body 540 through the front side of the second end cap 240 until the rear annular lip 534 meets the inner lip 542 of the second end cap 240. In this position, the stator mount portion 532 extends out of the front end of the inner annular body 540. In an embodiment, the stator mount portion 532 has a slightly larger diameter than the rear bearing support insert 530 so as to rest on the front end of the inner annular body 540 when the rear bearing support insert 530 is fully inserted. The stator assembly 400 is then mounted onto the stator mount portion 532. Thereafter, the rear bearing 216 is received along with the shaft from the front side of the second end cap 240 through the stator assembly 300 and secured into the bearing support insert 530 until it engages a rear annular lip 534 of the bearing support insert 530.

The foregoing description of the embodiments has been provided for purposes of illustration and description. It is not intended to be exhaustive or to limit the disclosure. Individual elements or features of a particular embodiment are generally not limited to that particular embodiment, but, where applicable, are interchangeable and can be used in a selected embodiment, even if not specifically shown or described. The same may also be varied in many ways. Such variations are not to be regarded as a departure from the disclosure, and all such modifications are intended to be included within the scope of the disclosure.

Example embodiments are provided so that this disclosure will be thorough, and will fully convey the scope to those who are skilled in the art. Numerous specific details are set forth such as examples of specific components, devices, and methods, to provide a thorough understanding of embodiments of the present disclosure. It will be apparent to those skilled in the art that specific details need not be employed, that example embodiments may be embodied in many different forms and that neither should be construed to limit the scope of the disclosure. In some example embodiments, well-known processes, well-known device structures, and well-known technologies are not described in detail.

The terminology used herein is for the purpose of describing particular example embodiments only and is not intended to be limiting. As used herein, the singular forms "a," "an," and "the" may be intended to include the plural forms as well, unless the context clearly indicates otherwise. The terms "comprises," "comprising," "including," and "having," are inclusive and therefore specify the presence of stated features, integers, steps, operations, elements, and/or components, but do not preclude the presence or addition of one or more other features, integers, steps, operations, elements, components, and/or groups thereof. The method steps, processes, and operations described herein are not to be construed as necessarily requiring their performance in the particular order discussed or illustrated, unless specifically identified as an order of performance. It is also to be understood that additional or alternative steps may be employed.

## Claims

1. An electric motor comprising:
a stator having a stator core, a plurality of stator teeth extending radially from the stator core, and a plurality of windings wound around the plurality of stator teeth;
a rotor rotatably positioned relative to the stator and having a rotor core and a plurality of permanent magnets secured to the rotor core in magnetic interface with the plurality of stator windings;
a motor spindle coupled to the rotor and extending along a center axis;
a first end cap formed on a first side of the stator;
a second end cap formed on a second side of the stator and secured to the first end cap to form a compartment around the stator and the rotor;
a plurality of motor wires electrically coupled to the plurality of stator windings and extending out of the compartment through a wire lid; and
a terminal box mounted to the wire lid to receive the plurality of motor wires, the terminal box comprising a box base fastened to the second end cap and forming a first sealed coupling to the wire lid, and a cover that makes a second sealing coupling with the box base, wherein the terminal box is arranged to receive a plurality of power wires external to the electric motor and electrically couple the plurality of power wires to the plurality of motor wires within the box base.

2. An electric motor according to Claim 1, further comprising:
a plurality of stator terminals electrically coupled to the plurality of windings and projecting axially from the stator through at least one slot formed in the second end cap such that a distal end of the plurality of stator terminals projects from a surface of the second end cap facing away from the stator, wherein the plurality of power wires is coupled to the distal end of the plurality of stator terminals to supply electric power to the plurality of stator windings via the plurality of stator terminals.

3. An electric motor according to Claim 2, further comprising a motor cover mounted on the second end cap to form a second compartment around the distal end of the plurality of stator terminals and at least a portion of the plurality of power wires.

4. An electric motor according to Claim 3, wherein the first end cap, the second end cap, and the motor cover form a substantially watertight seal around the stator, the rotor, and the position sensor assembly.

5. An electric motor according to Claim 3 or Claim 4, wherein the wire lid is formed at least partially by the motor cover.

6. An electric motor according to any preceding claim, further including a grommet disposed around the plurality of motor wires within the wire lid, wherein the grommet includes a seal lip comprising elastically-deformable material projecting out of an end of the wire lid, and wherein the box base is pressed against the seal lip to make the first sealed coupling.

7. An electric motor according to any preceding claim, wherein the box base includes a first face shaped to be mounted on an outer surface of the second end cap, and a second face opposite the first face and including a peripheral wall forming a compartment.

8. An electric motor according to Claim 7, wherein the box base further includes an opening between the first face and the second face through which the plurality of motor wires is received into the compartment.

9. An electric motor according to Claim 7 or Claim 8, wherein the cover is mounted around the peripheral wall with a layer of sealing material in between to make the second sealing coupling.

10. An electric motor according to any one of claims 7 to 9, wherein the plurality of power wires is received through a recessed portion of the peripheral wall, further including a grommet disposed around the plurality of power wires and captured within the recessed portion.

11. An electric motor according to any preceding claim, wherein the box base includes a plurality of interior walls forming channels for electrical connections between the respective ones of the plurality of motor wires and the plurality of power wires.

12. A power tool comprising:
a primary housing;
an electric motor according to any preceding claim mounted on the primary housing and drivably coupled to an output mechanism;
a battery compartment that receives a removable battery pack; and
a control housing that supports a control module configured to regulate supply of electric power from the removeable battery pack to the electric motor.

13. A power tool according to Claim 10, further comprising a handle mounted to the primary housing, wherein the handle supports the control housing proximate the terminal box.
